# EUROPÄISCHE PATENTSCHRIFT

(11) **EP 0 779 139 B1**
(45) Veröffentlichungstag und Bekanntmachung des Hinweises auf die Patenterteilung: **31.03.1999**
(21) Anmeldenummer: 96116417.5
(22) Anmeldetag: 14.10.1996
(51) Int. Cl.: B29C 45/17

(54) **Einrichtung zum Schliessen und Öffnen einer geteilten Form zum Spritzgiessen von Kunststoff**
Apparatus for opening and closing a form in several parts for plastic injection molding
Dispositif pour ouvrir et fermer un moule en plusieurs parties à injecter des matériaux plastiques

(30) Priorität: 11.12.1995 AT 1998/95
(43) Veröffentlichungstag der Anmeldung: 18.06.1997
(73) Patentinhaber: Engel Maschinenbau Gesellschaft m.b.H., A-4311 Schwertberg (AT)
(72) Erfinder: Urbanek, Otto, 4020 Linz (AT)
(74) Vertreter: Torggler, Paul, Dr.

(56) Entgegenhaltungen:
- DE-A- 3 038 274
- DE-A- 4 104 288
- US-A- 4 615 857
- US-A- 4 682 940
- US-A- 4 915 608

## Beschreibung

Die Erfindung bezieht sich auf eine Einrichtung zum Schließen und Öffnen einer geteilten Form zum Spritzgießen von Kunststoff, wobei je eine Formhälfte auf einer Aufspannplatte angeordnet ist und die Aufspannplatten beim Einspritzen des Kunststoffes auf die Formhälften eine Schließkraft ausüben, welche auf der den Formhälften abgewandten Seite in die Aufspannplatten eingeleitet wird.

Werkzeugaufspannplatten werden heute üblicherweise eben ausgeführt, da darauf Werkzeuge aufgespannt werden, die ebenfalls ebene Grundflächen besitzen. Befindet sich eine Platte dann unter Last, d.h. unter Schließkraft oder dem Einfluß der Auftreibkraft, so verbiegt sich die Formaufspannplatte. Abhängig von der Eigensteifigkeit des Spritzgießwerkzeuges wird sich dieses mehr oder weniger an die verformte Aufspannplatte anpassen. Die Verformung einer Werkzeugaufspannplatte ist von erheblicher Bedeutung für die Qualität herzustellender Spritzgußteile, deshalb wird auch generell versucht, durch entsprechende Plattenkonstruktionen die Verformungen gering zu halten. Eine hohe Steifigkeit einer Formaufspannplatte wird erreicht entweder durch sehr hohe Kastenkonstruktionen bzw. durch schwere kompakte Platten. Je größer die Spritzgießmaschinen sind, umso stärker ist der Einfluß der Plattendimensionierung auf die Gesamtkosten der Maschine.

Aus der US 4,915,608 ist eine Konstruktion bekannt geworden, bei der versucht wird, durch eine Vielzahl von Zwischenelementen unterschiedlicher Höhe, die zwischen einer planen Formaufspannplatte und der zugehörigen Formhälfte fixiert werden müssen, einen Ausgleich der beim Aufbringen der Schließkraft auftretenden Verformungen zu schaffen. Diese Konstruktion ist jedoch aufgrund ihrer zahlreichen Einzelteile äußerst aufwendig.

Der Erfindung liegt die Aufgabe zugrunde, eine leichte und einfache Konstruktion zu entwickeln, die eine geringe Verformung der Werkzeuge unter Betriebslast ermöglicht.

Diese Aufgabe wird dadurch gelöst, daß im unbelasteten Zustand die einer Formhälfte zugewandte Fläche der zugehörigen Aufspannplatte in jenem Bereich in Richtung zur Aufspannplatte aus der normal zur Schließrichtung verlaufenden Ebene zurückspringt, welcher der oder den Stellen maximaler Krafteinleitung in die Aufspannplatte gegenüberliegt.

Durch die erfindungsgemäße Maßnahme kann erreicht werden, daß im belasteten Zustand die Durchbiegung der Platte verschwindet oder sich zumindest verringert. Beträgt die Durchbiegung einer Platte beispielsweise 0,5 mm unter Betriebsbedingungen bei voller Schließkraft, so wird beispielsweise die Bombierung erhaben mit einem Maximalwert von 0,3 mm ausgeführt. Dies sichert, daß in der Last die Platte bei einer globalen Verformung von 0,5 mm nur 0,2 mm aus der ebenen Fläche hin verformt. Dadurch ist eine bessere Abstützung des Werkzeuges gegeben und ein wesentlich besseres Qualitätsniveau für die Spritzteile zu erwarten.

Die Bombierung der Platte ist gezielt einsetzbar, um bei Gleichbelassen der globalen Verformung eine verbesserte Qualität zu erzielen. Jedoch besteht auch die Möglichkeit, Platten schwächer auszuführen und damit größere Durchbiegungen zuzulassen. Durch die Bombierung der Aufspannfläche würde sich dennoch im Endzustand dem Werkzeug eine gleiche Situation bieten, wie an einer steiferen ebenen Platte.

Einzelheiten der Erfindung werden anschließend anhand der Zeichnung erläutert.

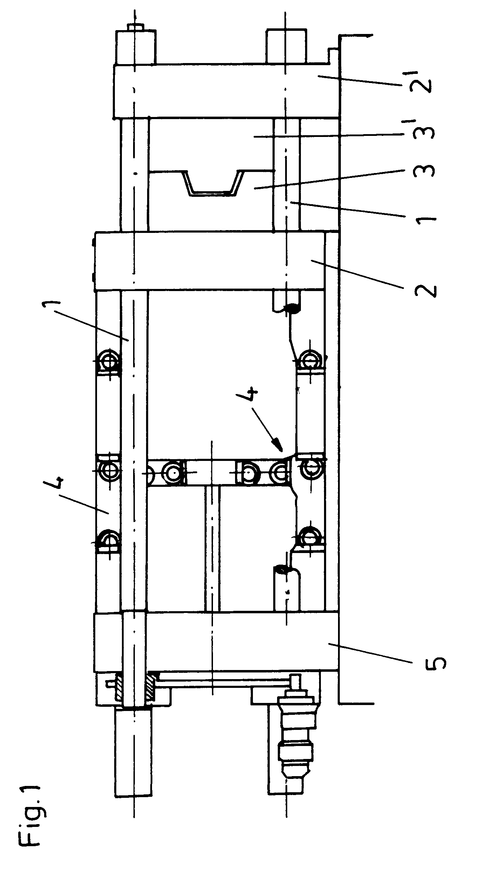

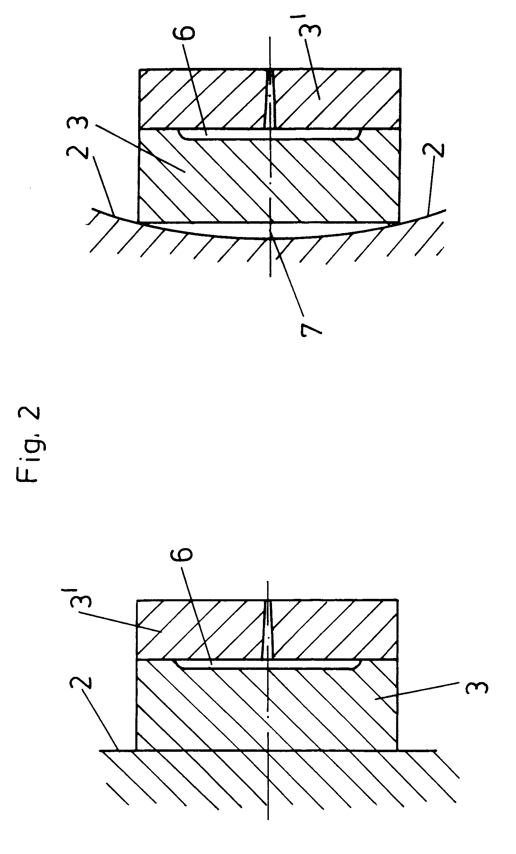

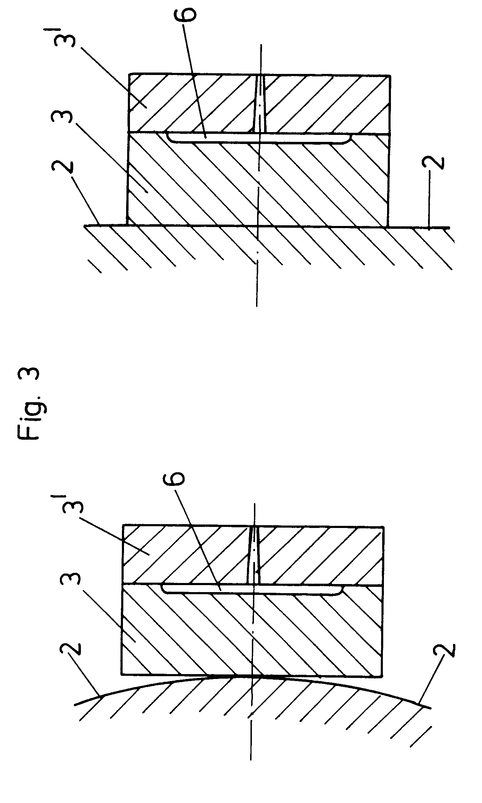

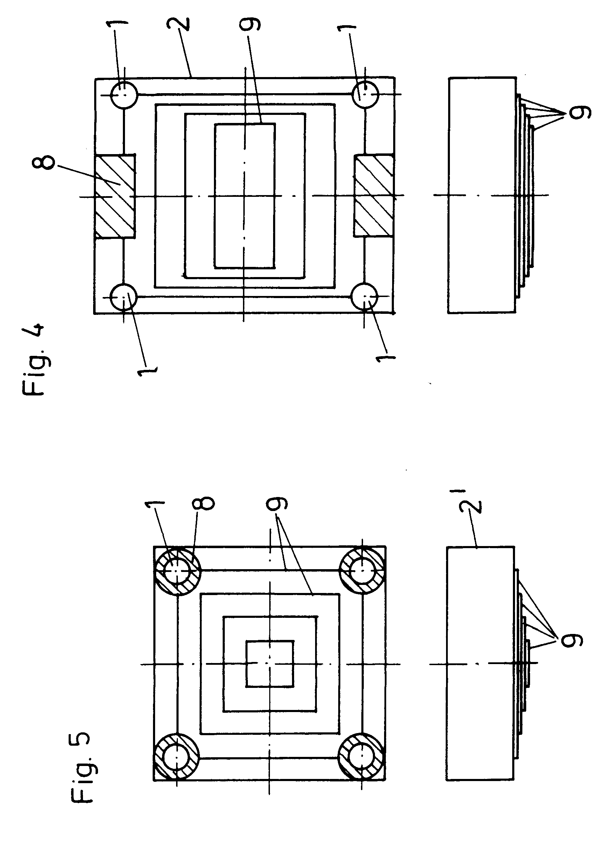

Fig. 1 zeigt die Schließeinheit einer Spritzgießmaschine in Seitenansicht, Fig. 2 ist eine schematische Darstellung einer konventionellen Formaufspannplatte im unbelasteten und belasteten Zustand. Fig. 3 zeigt ein gegenüber Fig. 2 erfindungsgemäß abgeändertes Prinzip, Fig. 4 - 7 sind verschiedene Ausführungsbeispiele der Erfindung in Ansichten von vorne und von oben.

Fig. 1 zeigt den üblichen Aufbau der Schließeinheit einer Spritzgießeinrichtung, insbesondere für thermoplastische Kunststoffe. Zwischen einer ortsfesten Formaufspannplatte 2' und einer horizontal bewegbaren Formaufspannplatte 2 sind Formhälften 3' und 3 angeordnet, welche einen mit Kunststoff zu füllenden Hohlraum umschließen. Diese Füllung erfolgt durch eine nicht dargestellte Spritzeinheit üblicherweise durch die feststehende Formaufspannplatte 2' hindurch. Damit der Spritzdruck die Formhälften 3,3' nicht auseinanderpreßt, wird während des Einspritzens die bewegbare Formaufspannplatte 2 durch den Schließdruck belastet. Dieser wird im dargestellten Fall durch einen Kniehebel 4 aufgebracht, welcher sich zwischen der sogenannten Stirnplatte 5 und der bewegbaren Formaufspannplatte 2 abstützt. Auch die Aufbringung des Schließdruckes durch ein hydraulisches Druckkissen ist bekannt. Bei Einrichtungen, welche keine Holme 1 aufweisen, erfolgt die Einleitung der Schließkraft in die bewegbare Formaufspannplatte 2 üblicherweise im Zentralbereich.

Fig. 2 erläutert das durch die Erfindung zu lösende Problem: im unbelasteten Zustand liegt die durch ihre Vorderfläche symbolisierte Formaufspannplatte 2 ganzflächig an der zugehörigen Formhälfte 3 an. Wird nun durch den Kniehebel 4 die Formaufspannplatte 2 am oberen und unteren Rand belastet, wölbt sie sich, wie rechts in Fig. 2 dargestellt, über die Formhälfte 3, sodaß ein Spalt 7 entsteht. Beim Einspritzen von Kunststoff in den Formhohlraum 6 wird die Formhälfte 3 in den Spalt 7 hinein gekrümmt, wodurch sich der Formhohlraum 6 erweitert, sodaß der erzeugte Gegenstand in seinen Abmessungen nicht mehr der unbelasteten Form entspricht.

Um den aufgezeigten Nachteil zu vermeiden, schlägt die Erfindung vor, wie in Fig. 3 schematisch angedeutet, die unbelastete Formaufspannplatte 2 zu bombieren, sodaß im rechts in Fig. 2 rechts dargestellten Belastungszustand Form und Formaufspannfläche überall plan aneinanderliegen.

Je nach der Art, in welcher die Formaufspannplatten von der Schließkraft belastet werden, sind in Durchführung der Erfindung verschiedene Bombierungen vorgesehen. Im Fall von Fig. 4 entspricht die Einleitung der Kraft dem anhand von Fig. 1 - 3 erläuterten Fall. Die Einleitung der Kraft in die schraffiert angedeuteten Bereiche 8 der Hinterseite der Formaufspannplatte 2 erfordert eine Bombierung der Vorderseite der Formaufspannplatte 2, welche in Form von abgestuften Schichten 9 dargestellt ist. Diese Stufen sind in der Darstellung weit übertrieben, in der Praxis wird man im allgemeinen überhaupt eine stetige sphärische oder zylindrische Krümmung vorsehen.

Der Belastungsfall nach Fig. 5 ist beispielsweise für die festehende Formaufspannplatte 2' von Fig. 1 gegeben. Die Bombierung muß dabei nicht wie dargestellt kissenförmig abgestuft sein, eine stetige sphärische Krümmung würde den angestrebten Zweck durchaus hinreichend erfüllen.

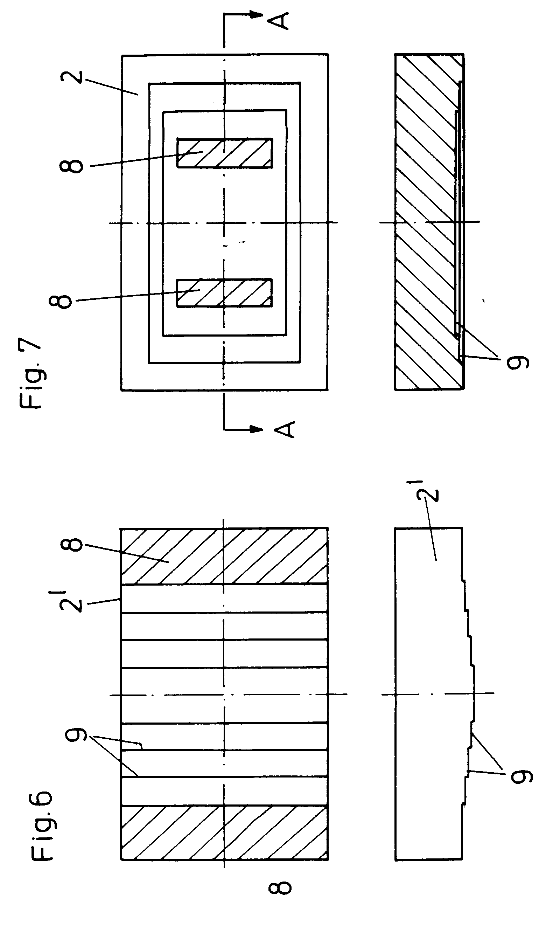

In Fig. 6 und 7 sind Belastungsfälle dargestellt, wie sie insbesondere bei holmlosen Spritzgießmaschinen auftreten. Fig. 6 bezieht sich dabei auf eine feststehende Formaufspannplatte 2', welche lediglich durch die vertikalen Seitenwangen des Maschinenrahmens in den Bereichen 8 abgestützt ist. Die zylindrische Durchbiegung im Mittelbereich kann hier durch eine zylindrische Bombierung mit vertikaler Zylinderachse ausgeglichen werden.

Der Belastungsfall nach Fig. 7 tritt eher bei der bewegbaren Formaufspannplatte 2 ein. Da hier die Kräfte zentral eingeleitet werden, werden die Randbereiche der Formaufspannplatte 2 durch die anliegende Formhälfte 3 zurückgedrückt. Die konkave Ausbildung der Plattenvorderseite gleicht diesen Effekt wieder aus, sodaß im Belastungsfall die rechts in Fig. 3 dargestellten Idealverhältnisse herrschen.

## Patentansprüche

1. Einrichtung zum Schließen und Öffnen einer geteilten Form (3, 3') zum Spritzgießen von Kunststoff, wobei je eine Formhälfte (3, 3') auf einer Aufspannplatte (2, 2') angeordnet ist und die Aufspannplatten (2, 2') beim Einspritzen des Kunststoffes auf die Formhälften (3, 3') eine Schließkraft ausüben, welche auf der den Formhälften (3, 3') abgewandten Seite in die Aufspannplatten (2, 2') eingeleitet wird, dadurch gekennzeichnet, daß im unbelasteten Zustand die einer Formhälfte (3, 3') zugewandte Fläche der zugehörigen Aufspannplatte (2, 2') in jenem Bereich in Richtung zur Aufspannplatte (2, 2') aus der normal zur Schließrichtung verlaufenden Ebene zurückspringt, welcher der oder den Stellen maximaler Krafteinleitung in die Aufspannplatte (2, 2') gegenüberliegt.

2. Einrichtung nach Anspruch 1, dadurch gekennzeichnet, daß die Fläche zylindrisch bombiert ist.

3. Einrichtung nach Anspruch 1, dadurch gekennzeichnet, daß die Fläche sphärisch bombiert ist.

## Claims

1. Apparatus for closing and opening a divided mould (3, 3') for the injection moulding of plastics material, wherein each mould half (3, 3') is arranged on a mounting plate (2, 2') and upon injection of the plastics material the mounting plates (2, 2') exert on the mould halves (3, 3') a closing force which is applied to the mounting plates (2, 2') on the side remote from the mould halves (3, 3'), characterised in that in the non-loaded condition the surface, which is towards a mould half (3, 3'), of the associated mounting plate (2, 2') is set back in a direction towards the mounting plate (2, 2') out of the plane extending normal to the closing direction, in that region which is opposite to the location or locations at which maximum force is applied to the mounting plate (2, 2').

2. Apparatus according to claim 1 characterised in that the surface is cylindrically cambered.

3. Apparatus according to claim 1 characterised in that the surface is spherically cambered.

## Revendications

1. Dispositif pour fermer et ouvrir un moule (3, 3') formé de plusieurs parties pour le moulage par injection d'une matière plastique, dans lequel les moitiés de moule (3, 3') sont disposées chacune sur un plateau de fixation (2, 2') et les plateaux de fixation (2, 2') appliquent sur les moitiés de moule (3, 3'), lors de l'injection de la matière plastique, une force de fermeture qui est appliquée sur le côté, tourné à l'opposé des moitiés de moule (3, 3'), dans les plateaux de serrage (2, 2'), caractérisé en ce qu'à l'état non chargé la surface, tournée vers une moitié de moule (3, 3'), du plateau de fixation associé (2, 2') recule dans chaque zone, en direction du plateau de fixation (2, 2') à partir du plan qui est perpendiculaire à la direction de fermeture et qui est situé en vis-à-vis du ou des emplacements d'application de force maximale dans le plateau de fixation (2, 2').

2. Dispositif selon la revendication 1, caractérisé en ce que la surface possède une forme bombée cylindrique.

3. Dispositif selon la revendication 1, caractérisé en ce que la surface possède une forme bombée sphérique.
